# EUROPÄISCHE PATENTSCHRIFT

(11) **EP 3 322 908 B1**
(45) Veröffentlichungstag und Bekanntmachung des Hinweises auf die Patenterteilung: **17.03.2021**
(21) Anmeldenummer: 16729492.5
(22) Anmeldetag: 14.06.2016
(51) Int. Cl.: F16C 35/063, F16C 33/58, F16C 33/60, F16C 19/54, F16H 57/00, F16H 1/32, F16D 1/08, F16D 1/10

(54) **GETRIEBE MIT ANLAUFSCHEIBE ZUR AXIALEN SICHERUNG VON WÄLZKÖRPERN EINES LAGERS**
GEARING WITH THRUST WASHER FOR AXIALLY SECURING ROLLING BODIES OF A BEARING
MÉCANISME DE TRANSMISSION COMPRENANT UN FLASQUE DE BUTÉE POUR LE BLOCAGE AXIAL D'ÉLÉMENTS ROULANTS D'UN PALIER

(30) Priorität: 14.07.2015 DE 102015008856; 27.08.2015 DE 102015011072
(43) Veröffentlichungstag der Anmeldung: 23.05.2018
(73) Patentinhaber: SEW-EURODRIVE GmbH & Co. KG, 76646 Bruchsal (DE)
(72) Erfinder: HANNET, Stefan, 68723 Schwetzingen (DE)
(86) Internationale Anmeldenummer: PCT/EP2016/000988
(87) Internationale Veröffentlichungsnummer: WO 2017/008873

(56) Entgegenhaltungen:
- EP-A2- 1 134 442
- WO-A1-2013/065261
- CN-A- 103 742 610
- DE-A1- 10 123 965
- DE-A1-102007 015 687
- JP-A- 2009 162 330
- JP-A- 2011 038 582
- JP-A- 2014 040 872

## Beschreibung

Die Erfindung betrifft ein Getriebe mit Anlaufscheibe.

Es ist allgemein bekannt, dass die Herstellung von Exzenterwellen eines Getriebes mit einer Rundschleifmaschine ausführbar ist.

Aus der EP1225356 A1 ist eine unrunde Welle-Nabe-Verbindung bekannt.

**Aus der** DE 101 23 965 A1 **ist ein Nadellager bekannt.**

**Aus der** WO2013/065261 A1 **ist als nächstliegender Stand der Technik ein Getriebe bekannt.**

**Aus der** EP 1 134 442 A2 **ist eine Radial-Axial-Lagereinheit bekannt.**

**Aus der** JP 2014 040 872 A **ist eine Lageranordnung bekannt.**

**Aus der** DE 10 2007 015 687 A1 **ist ein Radialwälzlager für einen Exzenterantrieb bekannt.**

**Aus der** JP 2009 162 330 A **ist ein Zyklogetriebe bekannt.**

**Aus der** CN 103 742 610 A **ist ein Getriebe bekannt.**

**Aus der** JP 2011 038 582 A **ist ein Getriebe bekannt.**

Der Erfindung liegt daher die Aufgabe zugrunde, die axiale Sicherung für ein Getriebe einfach weiterzubilden.

Erfindungsgemäß wird die Aufgabe bei dem Getriebe nach den in Anspruch 1 angegebenen Merkmalen gelöst.

Von Vorteil ist dabei, dass durch die außermittige kreisförmige Ausnehmung eine drehfeste Verbindung mit einer Exzenterwelle in einfacher Weise ermöglicht ist. Denn das Lager ist exzentrisch angeordnet, also auf einem Exzenterkernberiech der Welle. Die Ausnehmung ist jedoch zentrisch zur Drehachse der Exzenterwelle anordenbar. Somit ist durch einen axialen Vorsprung an der Anlaufscheibe eine drehfeste Verbindung zwischen Anlaufscheibe und Exzenterwelle herstellbar.

Von Vorteil ist dabei **weiter,** dass die Anlaufscheibe in einfacher Weise verdrehgesichert ist und somit drehfest mit der Exzenterwelle verbunden ist. Auf diese Weise sind die Wälzkörper des Lagers der exzentrisch angeordneten außenverzahnten Scheibe axial gesichert.

Bei einer vorteilhaften Ausgestaltung ist die Anlaufscheibe als Kreisscheibe ausgeführt, die einen axial hervorragenden, insbesondere radial äußeren, Vorsprung aufweist,
wobei die Kreisscheibe eine Ausnehmung aufweist, die außermittig angeordnet ist, insbesondere wobei also der Mittelpunkt der vorzugsweise kreisförmigen Ausnehmung beabstandet ist von der Mittelachse und/oder vom Mittelpunkt der Kreisscheibe,
insbesondere wobei der Vorsprung ringförmig ausgebildet ist und die Ringachse beabstandet ist vom der Mittelpunkt der vorzugsweise kreisförmigen Ausnehmung. Von Vorteil ist dabei, dass durch den Vorsprung zusammen mit der außermittig an der Anlaufscheibe angeordneten kreisförmigen Ausnehmung eine eindeutige Festlegung der Anlaufscheibe ausgeführt ist. Somit ist eine drehfeste Verbindung mit der Exzenterwelle in einfacher und kostengünstiger Weise erreichbar.

Bei einer vorteilhaften Ausgestaltung ist der vom Vorsprung überdeckte axiale Bereich von vom dem Exzenterkernbereich überdeckten axialen Bereich umfasst,
und/oder wobei der von der Anlaufscheibe überdeckte axiale Bereich mit dem von dem Exzenterkernbereich überdeckten axialen Bereich überlappt, insbesondere echt überlappt.

Von Vorteil ist dabei, dass der Vorsprung von der anlaufschiebe her übergestülpt ist über die umlaufende Kante des zylindrisch ausgeführten Exzenterkernbereichs. Somit ist eine kraftschlüssige Verbindung in einfacher Weise herstellbar und dadurch eine spielfreie drehfeste Verbindung mit der Exzenterwelle.

Bei einer vorteilhaften Ausgestaltung ist der Vorsprung kraftschlüssig mit dem Exzenterkernbereich verbunden, insbesondere auf diesen Bereich in radialer Richtung elastisch aufgedrückt ist. Von Vorteil ist dabei, dass eine spielfreie drehfeste Verbindung in einfacher Weise erreichbar ist.

Bei einer vorteilhaften Ausgestaltung weist bei dem Getriebe mit zumindest einer Exzenterwelle, zumindest einer außenverzahnten Scheibe und zumindest einem Umlaufrad, insbesondere Planetenrad, die Exzenterwelle einen Exzenterkernbereich auf, auf dem die außenverzahnte Scheibe drehbar gelagert angeordnet ist, insbesondere mittels eines Lagers,
wobei die Exzenterwelle einen unrund geformten Abschnitt aufweist, an welchem das Umlaufrad drehfest mit der Exzenterwelle verbunden ist.

Von Vorteil ist dabei, dass ein hohes Drehmoment auf kleinem Raumbereich übertragbar ist, weil das Umlaufrad über die besonders tragfähige Polygonverbindung mit der Exzenterwelle verbunden ist. Insbesondere im Vergleich zu einer Passfederverbindung überträgt die polygonale Welle-Nabe-Verbindung zwischen Umlaufrad und Exzenterwelle ein sehr hohes Drehmoment. Außerdem ist Herstellung einfach und kostengünstig ausführbar, da die zum Herstellen der Exzenterkernbereiche einsetzbar Werkzeugmaschine, insbesondere Schleifmaschine, auch zum Herstellen des unrunden Bereichs einsetzbar ist. Somit ist eine Schleifbearbeitung ohne zusätzliche Aufspannung und Ausrichtung ausführbar.

Bei einer vorteilhaften Ausgestaltung ist der Exzenterkernbereich ein kreiszylindrischer Abschnitt, der parallel aber beabstandet, insbesondere also nicht koaxial, zur Mittenachse der Exzenterwelle und/oder des Umlaufrades angeordnet ist. Von Vorteil ist dabei, dass der Exzenterkernberiech außermittig zur Wellenachse der Exzenterwelle angeordnet ist. Somit ist die Schleifbearbeitung durch dieselbe Maschine ausführbar, mit welcher auch der unrunde Bereich bearbeitbar ist.

Bei einer vorteilhaften Ausgestaltung ist der unrund geformte Abschnitt axial beabstandet vom Exzenterkernbereich. Von Vorteil ist dabei, dass zur Bearbeitung der Berieche nur eine axiale Verschiebung notwendig ist.

Bei einer vorteilhaften Ausgestaltung ist der unrund geformte Abschnitt hypotrochoidal geformt, insbesondere also als Hypotrochoide geformt ist oder aus hypotrochoidalen Abschnitten zusammengesetzt ist. Von Vorteil ist dabei, dass eines besonders tragfähige Welle-Nabe-Verbindung wählbar ist.

Bei einer vorteilhaften Ausgestaltung weist das Umlaufrad eine entsprechend dem unrund geformten Abschnitt geformte Ausnehmung auf,
insbesondere so dass das Umlaufrad drehfest und spielfrei mittels des unrunden Abschnittes mit der Exzenterwelle verbunden ist. Von Vorteil ist dabei, dass das Umlaufrad aufgesteckt ist auf die Exzenterwelle, insbesondere thermisch aufgeschrumpft, und somit einen spielfreie drehfeste Verbindung ermöglicht ist.

Bei einer vorteilhaften Ausgestaltung ist die Außenverzahnung der Scheibe mit einem Hohlrad, insbesondere mit einem gehäusebildenden Hohlrad, im Eingriff. Von Vorteil ist dabei, dass keine Rollen oder Kurvenscheiben benötigt werden sondern evolventenverzahnte Scheiben verwendbar sind. Somit ist ein exaktes und präzises Abrollen der Scheibe am Umfang des Hohlrades ermöglicht.

Bei einer vorteilhaften Ausgestaltung ist die Außenverzahnung als Evolventenverzahnung ausgeführt. Von Vorteil ist dabei, dass eine einfache und präzise Herstellung ausführbar ist.

Bei einer vorteilhaften Ausgestaltung weist die Exzenterwelle einen zweiten Exzenterkernbereich auf, der axial beabstandet ist vom ersten Exzenterkernbereich und einen Versatz in Umfangsrichtung von 180° aufweist,
insbesondere wobei die Exzenterkernbereiche gleichartig geformt ausgeführt sind. Von Vorteil ist dabei, dass eine ausgewuchtete Bewegung ermöglicht ist.

Bei einer vorteilhaften Ausgestaltung ist die Exzenterwelle drehbar gelagert in einer Abtriebswelle des Getriebes aufgenommen, insbesondere wobei die Achse der Exzenterwelle parallel und beabstandet zur Achse der Abtriebswelle angeordnet ist. Von Vorteil ist dabei, dass eine Abführung des Drehmoments an die Abtriebswelle in einfacher Weise ermöglicht ist.

Bei einer vorteilhaften Ausgestaltung ist die Abtriebswelle mittels zumindest eines Schräglagers in dem Hohlrad drehbar gelagert. Von Vorteil ist dabei, dass eine stabile Ausführung ermöglicht ist.

Bei einer vorteilhaften Ausgestaltung ist das Umlaufrad mit einer Sonnenradverzahnung im Eingriff, die koaxial zur Abtriebswelle angeordnet ist,
insbesondere wobei das Umlaufrad, die Sonnenradverzahnung und mindestens ein weiteres Umlaufrad eine Stirnradverteilgetriebestufe bilden. Von Vorteil ist dabei, dass eine zusätzliche Übersetzungsstufe vorhanden ist bei der Aufteilung des Drehmoments von der Sonne an mehrere Umlaufräder.

Bei einer vorteilhaften Ausgestaltung ist die Sonnenradverzahnung drehfest und koaxial zu einem Zahnrad angeordnet, das im Eingriff mit einem von einem Elektromotor direkt oder über eine Kupplung angetriebenen Verzahnungsteil, insbesondere Ritzel, ist. Von Vorteil ist dabei, dass eine Vorstufe mit einer geeigneten Übersetzung vorgeordnet ist.

Bei einer vorteilhaften Ausgestaltung weist die Exzenterwelle einen zweiten Exzenterkernbereich auf, auf dem eine zweite außenverzahnte Scheibe des Getriebes drehbar gelagert angeordnet ist,
wobei die Außenverzahnung der zweiten Scheibe mit der Innenverzahnung des Hohlrades im Eingriff ist. Von Vorteil ist dabei, dass eine ausgewuchtete Bewegung ermöglicht ist.

**Wichtige Merkmale bei dem erfindungsgemäßen Getriebe sind auch, dass es Getriebe mit zumindest einer Exzenterwelle, zumindest einer außenverzahnten Scheibe und zumindest einem Umlaufrad, insbesondere Planetenrad, einer Sonnenradwelle und einem Hohlrad vorgesehen ist, wobei**
**die Exzenterwelle einen Exzenterkernbereich aufweist, auf dem die außenverzahnte Scheibe drehbar gelagert angeordnet ist, insbesondere mittels eines Lagers,**
**wobei die Außenverzahnung der außenverzahnten Scheibe im Eingriff steht mit der Innenverzahnung des Hohlrades, insbesondere welches mit einem Gehäuseteil des Getriebes drehfest verbunden ist,**
**wobei die Exzenterwelle drehbar gelagert ist in einer Abtriebswelle, insbesondere Planetenträgerwelle,**
**wobei die Abtriebswelle drehbar gelagert ist zum Hohlrad,**
**wobei das jeweilige Umlaufrad jeweils drehfest verbunden ist mit einer oder der Exzenterwelle, insbesondere mittels eines polygonalen Abschnitts oder mittels einer Steckverzahnung,**
**wobei jedes Umlaufrad mit der Sonnenradwelle im Eingriff ist,**
**wobei die Außenverzahnung der außenverzahnten Scheibe eine Evolventenverzahnung ist und die Innenverzahnung des Hohlrades ebenfalls eine Evolventenverzahnung ist.**

**Von Vorteil ist dabei, dass eine Evolventenverzahnung verwendbar ist. Somit ist eine einfache Herstellung des äußeren Verzahnungseingriffs ausführbar. Denn für die Herstellung sind einfache Herstellmaschinen verwendbar. Durch Verwendung von zwei um 180° versetzt angeordnete Scheiben auf jeder Exzenterwelle ist die Unwucht des Getriebes reduzierbar und somit auch die Belastung der in Eingriff stehenden Evolventenverzahnungen des Hohlrades und der Scheiben. Vorzugsweise sind drei Exzenterwellen in Umfangsrichtung gleichmäßig beabstandet und jeweils drehbar in der Abtriebswelle gelagert. Die Exzenterwellen sind jeweils drehfest mit einem Planetenrad verbunden, wobei alle Planetenräder mit einer Sonnenradwelle drehfest verbunden sind. Somit ist die Sonnenradwelle als eintreibende Welle verwendbar und bildet mit den Planetenrädern eine Stirnradverteilstufe. Auf diese Weise ist das Getriebe einfach herstellbar und schwingungsarm realisierbar.**

**Die oben genannten vorteilhaften Ausgestaltungen sind bei diesem Getriebe alle anwendbar. Insbesondere die Ausgleichsscheibe bildet eine kostengünstige und einfache, aber sehr wirksame axiale Sicherung des Lagers der außenverzahnten Scheiben.**

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

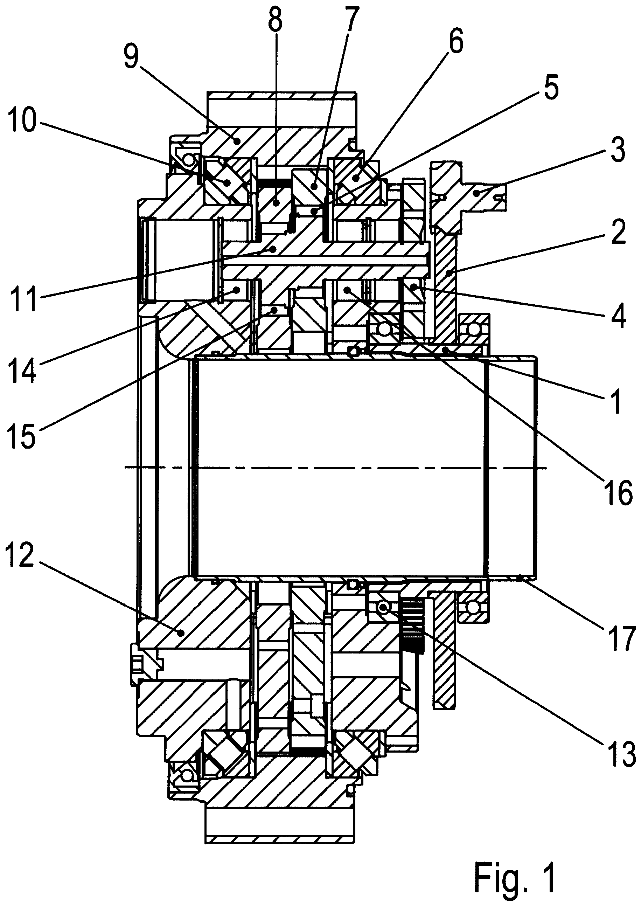

In der Figur 1 ist ein Querschnitt durch ein erfindungsgemäßes Getriebe mit Exzenterwellen 11 gezeigt.

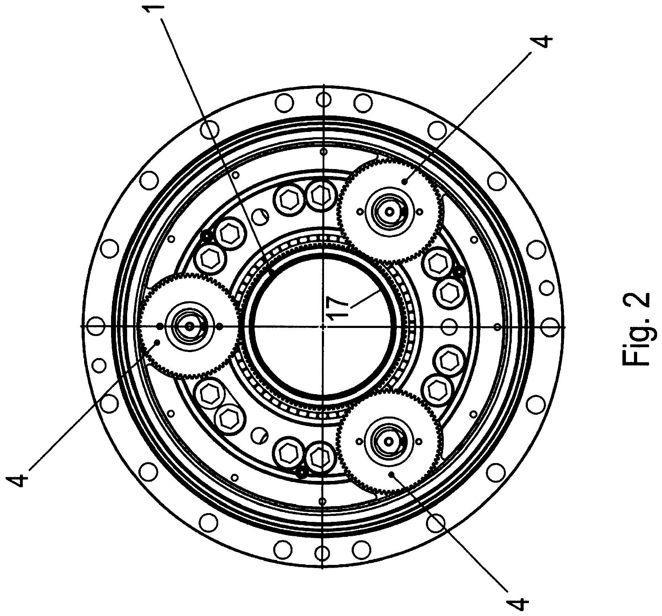

In der Figur 2 ist ein zugehöriger Längsschnitt gezeigt.

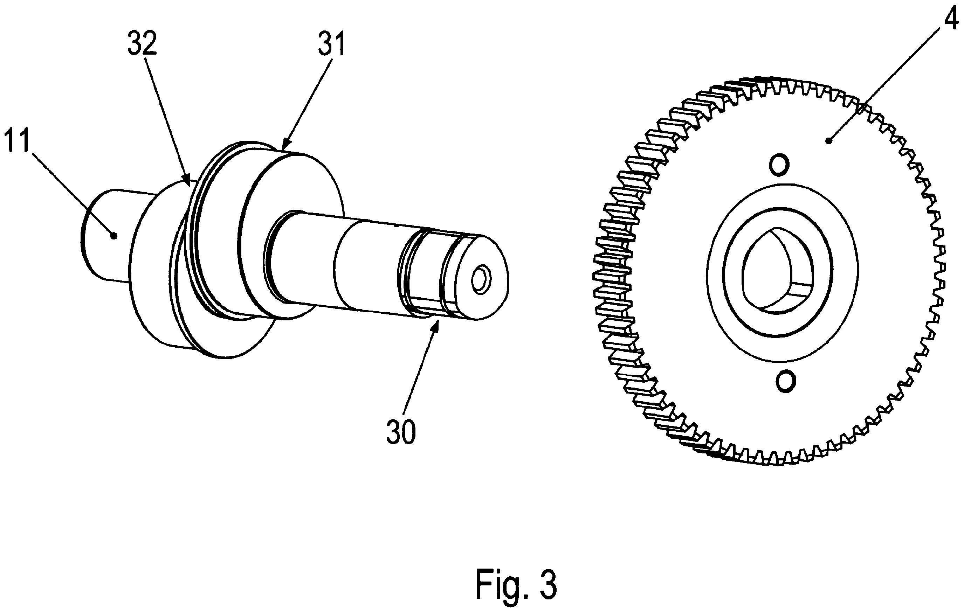

In der Figur 3 ist eine Exzenterwelle 11 und ein mit ihr verbundenes Planetenrad 4 in explodierter Darstellung gezeigt.

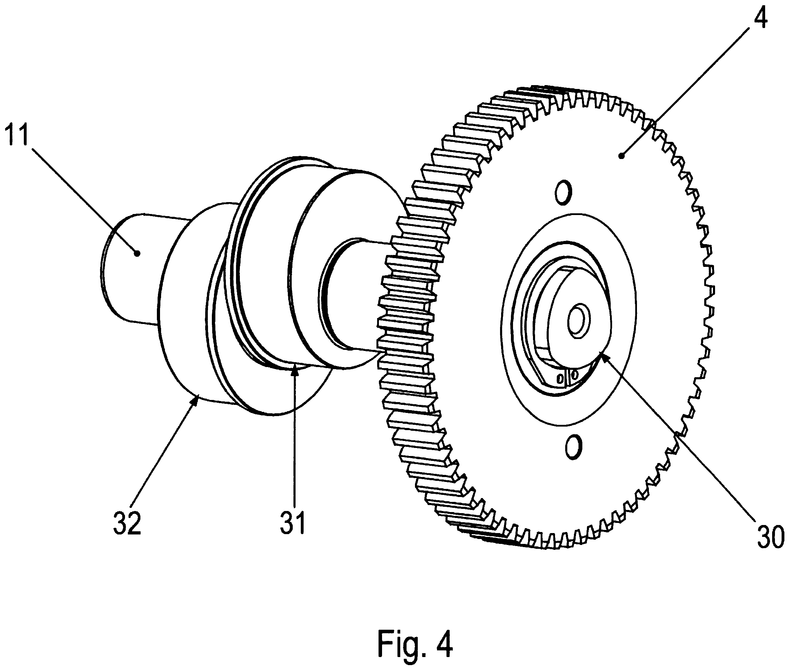

In der Figur 4 ist die zur Figur 3 gehörige nicht explodierte Darstellung gezeigt.
In der Figur 5 ist ein Querschnitt durch eine statt mit polygonalem Verbindungsabschnitt mit Steckverzahnungsabschnitt ausgeführte Exzenterwelle 11 samt der Lager (14, 15, 5, 16) und zweier Anlaufscheiben 50 für die Wälzkörper der Lager 5 und 15 gezeigt.
In der Figur 6 ist die Exzenterwelle 11, das Lager 5 und die Anlaufscheibe 50 explodiert dargestellt.
In der Figur 7 ist die Exzenterwelle und das Lager 5 explodiert und in Schrägansicht dargestellt.
In der Figur 8 ist die Anlaufscheibe 50 in Schrägdarstellung in einer ersten Blickrichtung dargestellt.
In der Figur 9 ist die Anlaufscheibe 50 in Schrägdarstellung in einer anderen Blickrichtung dargestellt.

Wie in den Figuren gezeigt, treibt die eintreibende Welle ein Ritzel 3 an, das mit einem Zahnrad 2 im Eingriff ist.

Das Zahnrad 2 ist mit einer Sonnenradwelle 1 drehfest verbunden, die eine Sonnenradverzahnung aufweist oder mit einem Sonnenrad drehfest verbunden ist.

Mit dieser Sonnenradverzahnung sind drei Planetenräder 4 im Eingriff, welche jeweils drehfest mit einer Exzenterwelle 11 verbunden sind. Somit bilden die Sonnenradverzahnung mit den Planetenrädern 4 eine Stirnradverteilgetriebestufe.

Zur drehfesten Verbindung des jeweiligen Planetenrads 4 mit der jeweiligen Exzenterwelle 11 weist die Exzenterwelle 11 einen polygonal geformten axialen Abschnitt auf. Dabei ist das Polygon vorzugsweise gemäß einer Hypotrochoide geformt. Das Planetenrad 4 weist eine entsprechend geformte innenpolygonale Ausnehmung auf und ist aufgesteckt, insbesondere vorzugsweise thermisch aufgeschrumpft, auf die Exzenterwelle 11. Somit ist eine drehfeste spielfreie Verbindung zwischen jeweiligem Planetenrad 4 und jeweiliger Exzenterwelle 11 in einfacher Weise ausgeführt.

Die polygonale Außenkontur der Exzenterwelle 11 ist ohne besonderen Aufwand herstellbar, da die Exzenterwelle zwei von dem axialen Abschnitt beabstandete axiale Abschnitte aufweist, die jeweils als Exzenterkernbereich (31, 32) geformt sind. Hierzu weist jeder Exzenterkernbereich zwar eine kreiszylindrische Außenfläche auf; dabei ist aber die Zylinderachse beabstandet von der Mittelachse der Exzenterwelle 11, wobei die Zylinderachse parallel zur Mittelachse ausgerichtet ist.

Die Exzenterkernbereiche 11 sind axial voneinander beabstandet oder zumindest höchstens berührend angeordnet und weisen einen Versatz in Umfangsrichtung von 180° auf, wobei die Exzenterkernbereiche 11 ansonsten gleichartig ausgeführt sind.

Somit sind die Exzenterkernbereiche 31 und 32 sowie der polygonale Abschnitt mit ein und derselben Werkzeugmaschine, also in einer einzigen Aufspannung, herstellbar. Für die polygonale Außenkontur ergibt sich also kein besonderer Zusatzherstellungsaufwand.

Auf den ersten Exzenterkernbereich 31 ist ein Lager 5 aufgesteckt, das in einem mittig an einer ersten außenverzahnten Scheibe 7 angeordneten Bohrloch aufgenommen ist. Somit ist die erste Scheibe 7 drehbar gelagert auf dem Exzenterkernbereich 31. Die Außenverzahnung der Scheibe 7 ist als Evolventenverzahnung ausgeführt und ist im Eingriff mit der Innenverzahnung eines mit dem Gehäuse verbundenen oder gehäusebildenden Hohlrades 9. Dabei ist auch die Innenverzahnung des Hohlrades 9 als Evolventenverzahnung ausgeführt.

Auf den zweiten Exzenterkernbereich 32 ist ein Lager 5 aufgesteckt, das in einem mittig an einer zweiten außenverzahnten Scheibe 7 angeordneten Bohrloch aufgenommen ist. Somit ist die zweite Scheibe 7 drehbar gelagert auf dem zweiten Exzenterkernbereich 32. Die Außenverzahnung der zweiten Scheibe 7 ist als Evolventenverzahnung ausgeführt und ist ebenfalls im Eingriff mit der Innenverzahnung des Hohlrades 9.

Die Innenverzahnung des Hohlrades 9 erstreckt sich über einen derart weiten axialen Bereich, dass dieser die beiden von den Außenverzahnungen der ersten und der zweiten Scheibe 7 überdeckten axialen Bereiche überdeckt.

Die Exzenterwellen 11 sind drehbar gelagert in der Abtriebswelle 12, wobei die Lageraufnahmen der die Exzenterwellen 11 lagernden Lager radial beabstandet sind von der Mittelachse der abtreibenden Welle 12.

Die abtreibende Welle 12 ist koaxial zur Sonnenradwelle 1 angeordnet.

Die Abtriebswelle 12 ist mittels Schräglager 10 im Hohlrad 9 gelagert.

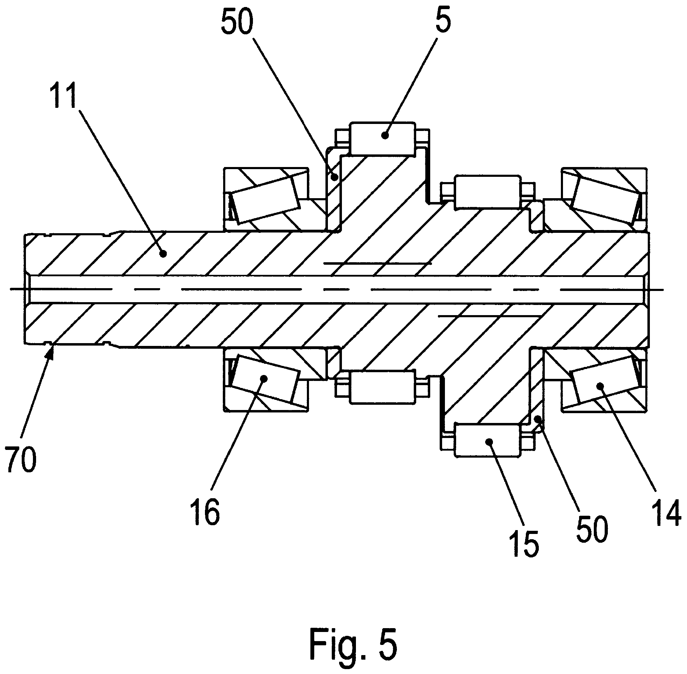

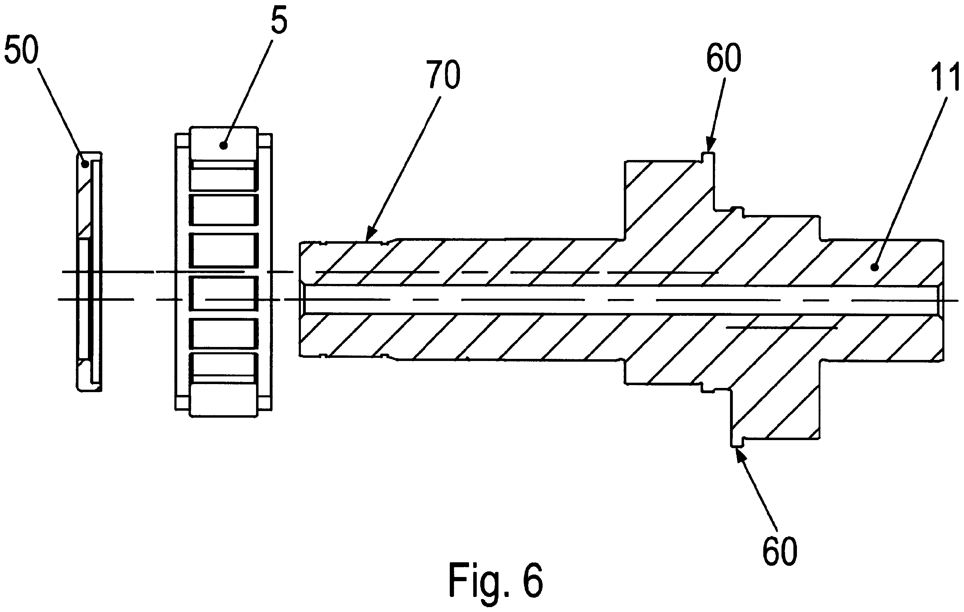

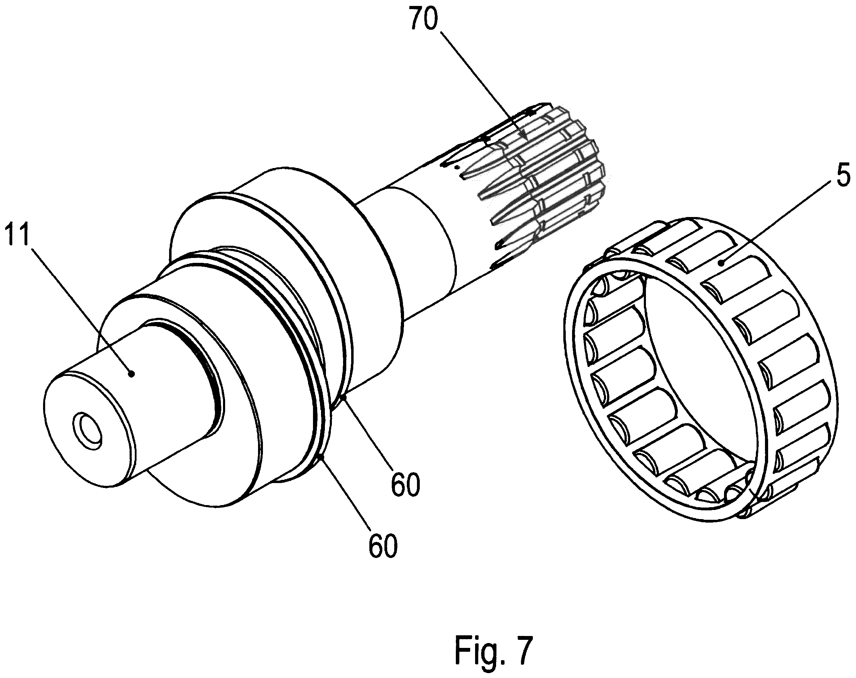

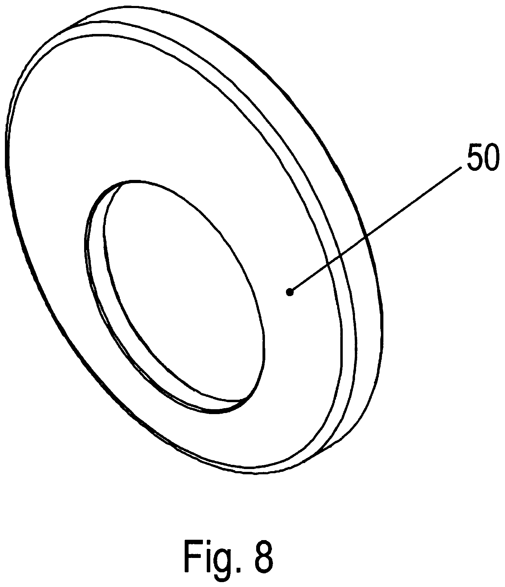

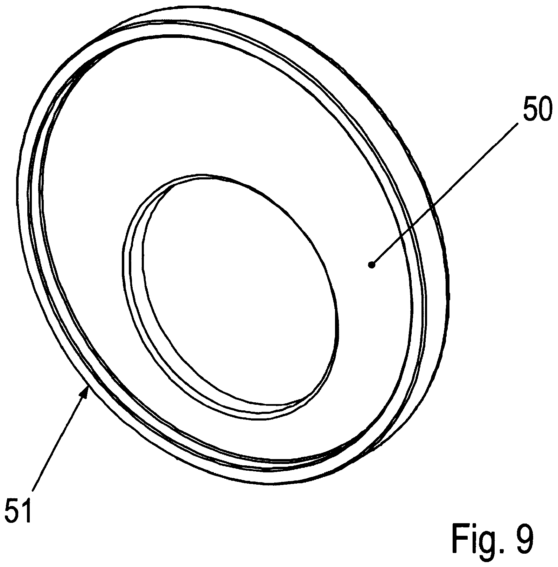

Wie in den Figuren 5 bis 9 gezeigt, ist die Exzenterwelle 11 auch mit einer Steckverzahnung 70 anstatt mit einer polygonalen Kontur ausführbar. das aufgenommene Zahnrad ist somit steckverbunden, insbesondere formschlüssig verbunden.

Das auf dem ersten Exzenterkernbereich 31 aufgeschobene Lager 5 lagert die erste Scheibe 7, das auf dem zweiten Exzenterkernbereich 32 aufgeschobene Lager 15 lagert die zweite Scheibe 8.

Die Exzenterwelle 11 ist beidseitig der Exzenterkernbereiche 31 und 32 gelagert mittels der Lager 14 und 16. Dabei ist das Lager 14 in der Abtriebswelle 12 aufgenommen.

An den Exzenterkernbereichen 31 und 32 sind jeweils Anlaufscheiben 50 angeordnet, die einen in Umfangsrichtung umlaufenden, axial hervorragenden Vorsprung 51 aufweisen, der eine axiale Begrenzung und Sicherung für die Wälzkörper des Lagers 5 bewirkt.

Die Anlaufscheibe 50 weist ein nicht mittiges Loch auf, durch welches ein Abschnitt der Exzenterwelle 11 hindurchgesteckt ist. Somit ist durch den Vorsprung 51, welcher über den Rand des jeweiligen Exzenterkernbereichs (31, 32) gestülpt ist, eine Verdrehsicherung für die Anlaufscheibe 50 gebildet. Die Anlaufscheibe 50 ist also in Umfangsrichtung formschlüssig und somit drehfest mit der Exzenterwelle 11 vorgesehen. Dabei wirkt der Vorsprung 51 gleichzeitig als axiale Begrenzung für die Wälzkörper.

Der Exzenterkernbereich 31 weist außerdem eine Anlaufborde 60 auf, die radial weiter ausgedehnt ist als der restliche, als Lageraufnahem für das Lager 5 ausgebildete Bereich des Exzenterkernbereichs 31. Da das Lager 5 axial zwischen der Anlaufborde 60 und der ersten Anlaufscheibe 50 mit deren Vorsprung 51 angeordnet ist, ist es beidseitig axial gesichert.

Die Anlaufborde 60 ist einstückig, also einteilig, an der Exzenterwelle 11, insbesondere am Exzenterkernbereich 31, ausgeformt.

Ebenso ist eine zweite Anlaufscheibe 50 zur axialen Sicherung des Lagers 15 und somit auch der Wälzkörper des Lagers 15, vorgesehen, wobei die zweite Anlaufscheibe 50 auf den zweiten Exzenterkernbereich 32 aufgeschoben ist und der Vorsprung der zweiten Anlaufscheibe die Wälzkörper des Lagers 15 axial begrenzt.

Der Exzenterkernbereich 32 weist außerdem eine weitere Anlaufborde 60 auf, die radial weiter ausgedehnt ist als der restliche, als Lageraufnahem für das Lager 15 ausgebildete Bereich des Exzenterkernbereichs 32. Da das Lager 15 axial zwischen der weiteren Anlaufborde 60 und der ersten Anlaufscheibe 50 mit deren Vorsprung 51 angeordnet ist, ist es beidseitig axial gesichert.

Die Anlaufborde 60 ist einstückig, also einteilig, an der Exzenterwelle 11, insbesondere am Exzenterkernbereich 32, ausgeformt.

Die jeweilige Anlaufscheibe 50 ist aus Stahl, insbesondere aus einem Stahlblech, gefertigt.

Die beiden Anlaufborden 60 sind also koaxial zum jeweiligen Exzenterkernbereich (31, 32) ausgeführt, wobei die Exzenterkernbereiche (31, 32) außermittig, also exzentrisch, zur Drehachse der Exzenterwelle 11 angeordnet sind.

Mit der Abtriebswelle 12 ist ein hohles Rohr 17 drehfest verbunden, welches das Schmieröl im Getriebeinnenraum begrenzt und somit hält. Das hohle Rohr 17 ist radial innerhalb der Sonnenradwelle1 und radial beabstandet von den Scheiben 7 und 8.

Mittels der Evolventenverzahnungen der Scheiben 7 und 8 sowie des Hohlrades 9 ist eine einfache Abstützung am stationären Teil, also auch als Gehäuseteil verwendbaren Teil oder also auch an einem mit dem Hohlrad 9 verbundenen Gehäuseteil, einfach und kostengünstig ausführbar.

### Bezugszeichenliste

- 1: Sonnenradwelle
- 2: Zahnrad
- 3: Ritzel
- 4: Planetenrad
- 5: Lager
- 6: Schräglager
- 7: erste außenverzahnte Scheibe
- 8: zweite außenverzahnte Scheibe
- 9: Hohlrad
- 10: Schräglager
- 11: Exzenterwelle
- 12: Abtriebswelle
- 13: Lager
- 14: Lager für Exzenterwelle 11
- 15: Lager für zweite Scheibe 8 zur Lagerung auf Exzenterwelle 11
- 16: Lager für Exzenterwelle zur drehbaren Lagerung gegenüber der Sonnenradverzahnung
- 17: Rohr
- 30: polygonaler Abschnitte der Exzenterwelle 11
- 31: erster Exzenterkernbereich
- 32: zweiter Exzenterkernbereich
- 50: Anlaufscheibe
- 60: Anlaufborde
- 51: umlaufender axialer Vorsprung
- 70: Steckverzahnung

## Patentansprüche

1. Getriebe mit zumindest einer Exzenterwelle (11), zumindest einer außenverzahnten Scheibe (7, 8) und zumindest einem Umlaufrad, insbesondere Planetenrad (4), einer Sonnenradwelle (1) und einem Hohlrad (9),
wobei die Exzenterwelle (11) einen Exzenterkernbereich (31, 32) aufweist, auf dem die außenverzahnte Scheibe (7, 8) drehbar gelagert angeordnet ist mittels eines Lagers (5, 15) mit Wälzkörpern,
wobei die Außenverzahnung der außenverzahnten Scheibe (7, 8) im Eingriff steht mit der Innenverzahnung des Hohlrades (9), welches mit einem Gehäuseteil des Getriebes drehfest verbunden ist,
wobei die Exzenterwelle (11) drehbar gelagert ist in einer Abtriebswelle, also Planetenträgerwelle,
wobei die Abtriebswelle drehbar gelagert ist zum Hohlrad (9),
wobei das jeweilige Umlaufrad jeweils drehfest verbunden ist mit einer oder der Exzenterwelle (11), insbesondere mittels eines polygonalen Abschnitts oder mittels einer Steckverzahnung,
wobei jedes Umlaufrad mit der Sonnenradwelle (1) im Eingriff ist,
wobei die Außenverzahnung der außenverzahnten Scheibe (7, 8) eine Evolventenverzahnung ist und die Innenverzahnung des Hohlrades (9) ebenfalls eine Evolventenverzahnung ist,
**dadurch gekennzeichnet, dass**
ieine Anlaufscheibe (50) für die axiale Begrenzung und axiale Sicherung der Wälzkörper der Lager (5, 15) als Kreisscheibe ausgeführt ist, die einen axial hervorragenden, radial äußeren, Vorsprung (51) aufweist,
wobei die Kreisscheibe eine Ausnehmung aufweist, die außermittig angeordnet ist, also der Mittelpunkt der vorzugsweise kreisförmigen Ausnehmung beabstandet ist von der Mittelachse und/oder vom Mittelpunkt der Kreisscheibe,
wobei der Vorsprung (51) ringförmig ausgebildet ist und die Ringachse beabstandet ist vom Mittelpunkt der vorzugsweise kreisförmigen Ausnehmung,
wobei der vom Vorsprung (51) überdeckte axiale Bereich von vom dem Exzenterkernbereich (31, 32) überdeckten axialen Bereich umfasst ist,
wobei der von der Anlaufscheibe (50) überdeckte axiale Bereich mit dem von dem Exzenterkernbereich (31, 32) überdeckten axialen Bereich echt überlappt,
wobei der Vorsprung (51) kraftschlüssig mit dem Exzenterkernbereich (31, 32) verbunden ist, insbesondere auf diesen Bereich in radialer Richtung elastisch aufgedrückt ist.

2. Getriebe nach Anspruch 1,
**dadurch gekennzeichnet, dass**
eine Anlaufscheibe (50) zur axialen Begrenzung der Wälzkörper des Lagers (5, 15) der außenverzahnten Scheibe (7, 8) auf die Exzenterwelle (11) aufgeschoben ist,
insbesondere wobei dabei die Anlaufscheibe (50) auf einen zentrischen, insbesondere also zur Achse der Exzenterwelle (11) rotationssymmetrischen, Bereich der Exzenterwelle (11) aufgeschoben ist,
wobei ein an der Anlaufscheibe (50) ausgebildeter Vorsprung (51) eine Kante, insbesondere einen Rand, des Exzenterkernbereichs (31, 32) überdeckt,
insbesondere so, dass die Anlaufscheibe (50), insbesondere zumindest in Umfangsrichtung, formschlüssig verbunden und/oder drehfest verbunden ist mit der Exzenterwelle (11), insbesondere deren Drehachse mittig durch die Kreisscheibe verläuft.

3. Getriebe nach einem der vorangegangenen Ansprüche,
**dadurch gekennzeichnet, dass**
die Anlaufscheibe (50) verdrehgesichert ist,
wobei die Anlaufscheibe (50) als Kreisscheibe ausgeführt ist, die einen axial hervorragenden, insbesondere radial äußeren, Vorsprung (51) aufweist,
wobei die Kreisscheibe eine Ausnehmung aufweist, die außermittig angeordnet ist, insbesondere wobei also der Mittelpunkt der vorzugsweise kreisförmigen Ausnehmung beabstandet ist von der Mittelachse und/oder vom Mittelpunkt der Kreisscheibe,
insbesondere so, dass die Anlaufscheibe (50), insbesondere zumindest in Umfangsrichtung, formschlüssig verbindbar und/oder drehfest verbindbar ist mit einer Exzenterwelle (11), insbesondere deren Drehachse mittig durch die Kreisscheibe verläuft,
insbesondere wobei der Vorsprung (51) ringförmig ausgebildet ist und die Ringachse beabstandet ist vom der Mittelpunkt der vorzugsweise kreisförmigen Ausnehmung.

4. Getriebe nach einem der vorangegangenen Ansprüche,
**dadurch gekennzeichnet, dass**
die Anlaufscheibe (50) als Kreisscheibe ausgeführt ist, die einen axial hervorragenden, insbesondere radial äußeren, Vorsprung (51) aufweist,
wobei die Kreisscheibe eine Ausnehmung aufweist, die außermittig angeordnet ist, insbesondere wobei also der Mittelpunkt der vorzugsweise kreisförmigen Ausnehmung beabstandet ist von der Mittelachse und/oder vom Mittelpunkt der Kreisscheibe,
insbesondere wobei der Vorsprung (51) ringförmig ausgebildet ist und die Ringachse beabstandet ist vom der Mittelpunkt der vorzugsweise kreisförmigen Ausnehmung.

5. Getriebe nach einem der vorangegangenen Ansprüche,
**dadurch gekennzeichnet, dass**
der vom Vorsprung (51) überdeckte axiale Bereich von vom dem Exzenterkernbereich (31, 32) überdeckten axialen Bereich umfasst ist,
und/oder wobei der von der Anlaufscheibe (50) überdeckte axiale Bereich mit dem von dem Exzenterkernbereich (31, 32) überdeckten axialen Bereich überlappt, insbesondere echt überlappt.

6. Getriebe nach einem der vorangegangenen Ansprüche,
**dadurch gekennzeichnet, dass**
der Vorsprung (51) kraftschlüssig mit dem Exzenterkernbereich (31, 32) verbunden ist, insbesondere auf diesen Bereich in radialer Richtung elastisch aufgedrückt ist.

7. Getriebe nach einem der vorangegangenen Ansprüche,
**dadurch gekennzeichnet, dass**
die Exzenterwelle (11) einen unrund geformten Abschnitt aufweist, an welchem das Umlaufrad drehfest mit der Exzenterwelle (11) verbunden ist.

8. Getriebe nach einem der vorangegangenen Ansprüche,
**dadurch gekennzeichnet, dass**
der Exzenterkernbereich (31, 32) ein kreiszylindrischer Abschnitt ist, der parallel aber beabstandet, insbesondere also nicht koaxial, zur Mittenachse der Exzenterwelle (11) und/oder des Umlaufrades angeordnet ist.

9. Getriebe nach einem der vorangegangenen Ansprüche,
**dadurch gekennzeichnet, dass**
der unrund geformte Abschnitt axial beabstandet ist vom Exzenterkernbereich (31, 32).

10. Getriebe nach einem der vorangegangenen Ansprüche,
**dadurch gekennzeichnet, dass**
der unrund geformte Abschnitt hypotrochoidal geformt ist, insbesondere also als Hypotrochoide geformt ist oder aus hypotrochoidalen Abschnitten zusammengesetzt ist.

11. Getriebe nach einem der vorangegangenen Ansprüche,
**dadurch gekennzeichnet, dass**
das Umlaufrad eine entsprechend dem unrund geformten Abschnitt geformte Ausnehmung aufweist,
insbesondere so, dass das Umlaufrad drehfest und spielfrei mittels des unrunden Abschnittes mit der Exzenterwelle (11) verbunden ist.

12. Getriebe nach einem der vorangegangenen Ansprüche,
**dadurch gekennzeichnet, dass**
die Außenverzahnung der Scheibe (7, 8) mit einem Hohlrad (9), insbesondere mit einem gehäusebildenden Hohlrad (9) im Eingriff ist.

13. Getriebe nach einem der vorangegangenen Ansprüche,
**dadurch gekennzeichnet, dass**
die Außenverzahnung als Evolventenverzahnung ausgeführt ist.

14. Getriebe nach einem der vorangegangenen Ansprüche,
**dadurch gekennzeichnet, dass**
die Exzenterwelle (11) einen zweiten Exzenterkernbereich (31, 32) aufweist, der axial beabstandet ist vom ersten Exzenterkernbereich (31, 32) und einen Versatz in Umfangsrichtung von 180° aufweist,
insbesondere wobei die Exzenterkernbereiche (31, 32) gleichartig geformt ausgeführt sind.

15. Getriebe nach einem der vorangegangenen Ansprüche,
**dadurch gekennzeichnet, dass**
die Exzenterwelle (11) drehbar gelagert in einer Abtriebswelle des Getriebes aufgenommen ist, insbesondere wobei die Achse der Exzenterwelle (11) parallel und beabstandet zur Achse der Abtriebswelle angeordnet ist.

16. Getriebe nach einem der vorangegangenen Ansprüche,
**dadurch gekennzeichnet, dass**
die Abtriebswelle mittels zumindest eines Schräglagers (6, 10) in dem Hohlrad (9) drehbar gelagert ist.

17. Getriebe nach einem der vorangegangenen Ansprüche,
**dadurch gekennzeichnet, dass**
das Umlaufrad mit einer Sonnenradverzahnung im Eingriff ist, die koaxial zur Abtriebswelle angeordnet ist,
insbesondere wobei das Umlaufrad, die Sonnenradverzahnung und mindestens ein weiteres Umlaufrad eine Stirnradverteilgetriebestufe bilden.

18. Getriebe nach einem der vorangegangenen Ansprüche,
**dadurch gekennzeichnet, dass**
die Sonnenradverzahnung drehfest und koaxial zu einem Zahnrad angeordnet ist, das im Eingriff mit einem von einem Elektromotor direkt oder über eine Kupplung angetriebenen Verzahnungsteil, insbesondere Ritzel, ist.

19. Getriebe nach einem der vorangegangenen Ansprüche,
**dadurch gekennzeichnet, dass**
die Exzenterwelle (11) einen zweiten Exzenterkernbereich (31, 32) aufweist, auf dem eine zweite außenverzahnte Scheibe (7, 8) des Getriebes drehbar gelagert angeordnet ist,
wobei die Außenverzahnung der zweiten Scheibe (7, 8) mit der Innenverzahnung des Hohlrades (9) im Eingriff ist.

## Claims

1. A gear unit with at least one eccentric shaft (11), at least one externally toothed disc (7, 8) and at least one epicyclic wheel, in particular planet wheel (4), of a sun gear shaft (1), and a ring gear (9),
wherein the eccentric shaft (11) has an eccentric core region (31, 32) on which the externally toothed disc (7, 8) is arranged rotatably mounted by means of a bearing (5, 15) with rolling elements,
wherein the external toothing of the externally toothed disc (7, 8) is engaged with the internal toothing of the ring gear (9), which gear is connected non-rotatably to a housing part of the gear unit,
wherein the eccentric shaft (11) is rotatably mounted in an output shaft, i.e. pinion cage shaft,
wherein the output shaft is rotatably mounted in relation to the ring gear (9),
wherein the respective epicyclic wheel is connected in each case non-rotatably to a or the eccentric shaft (11), in particular by means of a polygonal portion or by means of a spline,
wherein each epicyclic wheel is engaged with the sun gear shaft (1),
wherein the external toothing of the externally toothed disc (7, 8) is involute toothing and the internal toothing of the ring gear (9) likewise is involute toothing,
**characterised in that**
a thrust washer (50) for axially limiting and axially securing the rolling elements of the bearings (5, 15) is embodied as a circular disc which has an axially protruding, radially outer, projection (51),
the circular disc having a cutout which is arranged eccentrically, therefore the centre point of the preferably circular cutout is spaced apart from the centre line and/or from the centre point of the circular disc,
the projection (51) being formed in annular manner and the ring axis being spaced apart from the centre point of the preferably circular cutout,
the axial region covered by the projection (51) being encompassed by the axial region covered by the eccentric core region (31, 32),
the axial region covered by the thrust washer (50) overlapping true with the axial region covered by the eccentric core region (31, 32),
the projection (51) being connected in non-positive manner to the eccentric core region (31, 32), in particular being elastically pressed onto this region in the radial direction.

2. A gear unit according to Claim 1,
**characterised in that**
a thrust washer (50) for axially limiting the rolling elements of the bearing (5, 15) of the externally toothed disc (7, 8) is pushed onto the eccentric shaft (11),
in particular with in this case the thrust washer (50) being pushed onto a region of the eccentric shaft (11) which is central, in particular therefore rotationally symmetrical to the axis of the eccentric shaft (11),
with a projection (51) formed on the thrust washer (50) covering an edge, in particular a margin, of the eccentric core region (31, 32),
in particular such that the thrust washer (50), in particular at least in the circumferential direction, is connected in positive manner and/or is connected non-rotatably to the eccentric shaft (11), in particular the axis of rotation thereof runs centrally through the circular disc.

3. A gear unit according to one of the preceding claims,
**characterised in that**
the thrust washer (50) is secured against twisting,
the thrust washer (50) being embodied as a circular disc which has an axially protruding, in particular radially outer, projection (51),
the circular disc having a cutout which is arranged eccentrically, in particular with therefore the centre point of the preferably circular cutout being spaced apart from the centre line and/or from the centre point of the circular disc,
in particular such that the thrust washer (50), in particular at least in the circumferential direction, can be connected in positive manner and/or can be connected non-rotatably to an eccentric shaft (11), in particular the axis of rotation thereof runs centrally through the circular disc,
in particular with the projection (51) being formed in annular manner and the ring axis being spaced apart from the centre point of the preferably circular cutout.

4. A gear unit according to one of the preceding claims,
**characterised in that**
the thrust washer (50) is embodied as a circular disc which has an axially protruding, in particular radially outer, projection (51),
the circular disc having a cutout which is arranged eccentrically, in particular with therefore the centre point of the preferably circular cutout being spaced apart from the centre line and/or from the centre point of the circular disc,
in particular with the projection (51) being formed in annular manner and the ring axis being spaced apart from the centre point of the preferably circular cutout.

5. A gear unit according to one of the preceding claims,
**characterised in that**
the axial region covered by the projection (51) is encompassed by the axial region covered by the eccentric core region (31, 32),
and/or with the axial region covered by the thrust washer (50) overlapping with the axial region covered by the eccentric core region (31, 32), in particular overlapping true.

6. A gear unit according to one of the preceding claims,
**characterised in that**
the projection (51) is connected in non-positive manner to the eccentric core region (31, 32), in particular is elastically pressed onto this region in the radial direction,

7. A gear unit according to one of the preceding claims,
**characterised in that**
the eccentric shaft (11) has a non-circular portion on which the epicyclic wheel is connected non-rotatably to the eccentric shaft (11).

8. A gear unit according to one of the preceding claims,
**characterised in that**
the eccentric core region (31, 32) is a regular-cylindrical portion which is arranged parallel to but spaced apart from, in particular therefore non-coaxially with, the centre line of the eccentric shaft (11) and/or of the epicyclic wheel.

9. A gear unit according to one of the preceding claims,
**characterised in that**
the non-circular portion is axially spaced apart from the eccentric core region (31, 32).

10. A gear unit according to one of the preceding claims,
**characterised in that**
the non-circular portion is formed hypotrochoidally, in particular therefore is formed as a hypotrochoid or is composed of hypotrochoidal portions.

11. A gear unit according to one of the preceding claims,
**characterised in that**
the epicyclic wheel has a cutout formed corresponding to the non-circular portion,
in particular such that the epicyclic wheel is connected to the eccentric shaft (11) non-rotatably and without play by means of the non-circular portion.

12. A gear unit according to one of the preceding claims,
**characterised in that**
the external toothing of the disc (7, 8) is engaged with a ring gear (9), in particular with a housing-forming ring gear (9).

13. A gear unit according to one of the preceding claims,
**characterised in that**
the external toothing is embodied as involute toothing.

14. A gear unit according to one of the preceding claims,
**characterised in that**
the eccentric shaft (11) has a second eccentric core region (31, 32) which is axially spaced apart from the first eccentric core region (31, 32) and has an offset in the circumferential direction of 180°,
in particular with the eccentric core regions (31, 32) being embodied similarly formed.

15. A gear unit according to one of the preceding claims,
**characterised in that**
the eccentric shaft (11) is received rotatably mounted in an output shaft of the gear unit, in particular with the axis of the eccentric shaft (11) being arranged parallel to and spaced apart from the axis of the output shaft.

16. A gear unit according to one of the preceding claims,
**characterised in that**
the output shaft is rotatably mounted in the ring gear (9) by means of at least one angular contact bearing (6, 10).

17. A gear unit according to one of the preceding claims,
**characterised in that**
the epicyclic wheel is engaged with sun gear toothing which is arranged coaxially with the output shaft,
in particular with the epicyclic wheel, the sun gear toothing and at least one further epicyclic wheel forming a spur gear transfer gear stage.

18. A gear unit according to one of the preceding claims,
**characterised in that**
the sun gear toothing is arranged non-rotatably and coaxially with a gear wheel which is engaged with a toothed part, in particular pinion, driven by an electric motor directly or by way of a coupling.

19. A gear unit according to one of the preceding claims,
**characterised in that**
the eccentric shaft (11) has a second eccentric core region (31, 32), on which a second externally toothed disc (7, 8) of the gear unit is arranged rotatably mounted,
with the external toothing of the second disc (7, 8) being engaged with the internal toothing of the ring gear (9).

## Revendications

1. Transmission comprenant au moins un arbre d'excentrique (11), au moins un disque à denture extérieure (7, 8) et au moins une roue planétaire, en particulier un pignon planétaire (4), un arbre de roue solaire (1) et une couronne dentée (9),
l'arbre d'excentrique (11) présentant une région de cœur d'excentrique (31, 32) sur laquelle est disposé le disque à denture extérieure (7, 8) de manière supportée à rotation au moyen d'un palier (5, 15) comprenant des corps de roulement,
la denture extérieure du disque à denture extérieure (7, 8) étant en prise avec la denture intérieure de la couronne dentée (9) qui est connectée de manière solidaire en rotation à une partie de boîtier de la transmission,
l'arbre d'excentrique (11) étant supporté à rotation dans un arbre de prise de force, c'est-à-dire un arbre de porte-satellite,
l'arbre de prise de force étant supporté de manière rotative par rapport à la couronne dentée (9),
la roue planétaire respective étant connectée de manière solidaire en rotation à chaque fois à un ou à l'arbre d'excentrique (11), en particulier au moyen d'une portion polygonale ou au moyen d'une denture de type cannelure,
chaque roue planétaire étant en prise avec l'arbre de roue solaire (1),
la denture extérieure du disque à denture extérieure (7, 8) étant une denture à développante et la denture intérieure de la couronne dentée (9) étant également une denture à développante,
**caractérisée en ce**
**qu'**un disque de butée (50) pour la limitation axiale et la fixation axiale des corps de roulement du palier (5, 15) est réalisé sous forme de disque circulaire qui présente une saillie radialement extérieure (51), faisant saillie axialement,
le disque circulaire présentant un évidement qui est disposé de manière excentrée, c'est-à-dire que le centre de l'évidement de préférence circulaire est espacé de l'axe médian et/ou du centre du disque circulaire,
la saillie (51) étant réalisée sous forme annulaire et l'axe de l'anneau étant espacé du centre de l'évidement de préférence circulaire,
la région axiale recouverte par la saillie (51) étant comprise par la région axiale recouverte par la région de cœur d'excentrique (31, 32),
la région axiale recouverte par le disque de butée (50) chevauchant exactement la région axiale recouverte par la région de cœur d'excentrique (31, 32),
la saillie (51) étant connectée par engagement par force à la région de cœur d'excentrique (31, 32), en particulier étant pressée élastiquement dans la direction radiale sur cette région.

2. Transmission selon la revendication 1,
**caractérisée en ce**
**qu'**un disque de butée (50) pour la limitation axiale des corps de roulement du palier (5, 15) du disque à denture extérieure (7, 8) est poussé sur l'arbre d'excentrique (11),
en particulier le disque de butée (50) étant en l'occurrence poussé sur une région centrale de l'arbre d'excentrique (11), notamment avec une symétrie de révolution par rapport à l'axe de l'arbre d'excentrique (11),
une saillie (51) réalisée au niveau du disque de butée (50) recouvrant une arête, en particulier un bord, de la région de cœur d'excentrique (31, 32),
en particulier de telle sorte que le disque de butée (50), au moins en particulier dans la direction périphérique, soit connecté par engagement par correspondance de formes et/ou soit connecté de manière solidaire en rotation à l'arbre d'excentrique (11), en particulier dont l'axe de rotation s'étend centralement à travers le disque circulaire.

3. Transmission selon l'une quelconque des revendications précédentes,
**caractérisée en ce que**
le disque de butée (50) est fixé de manière solidaire en rotation,
le disque de butée (50) étant réalisé sous forme de disque circulaire qui présente une saillie (51) faisant saillie axialement, notamment radialement extérieure,
le disque circulaire présentant un évidement qui est disposé de manière excentrée,
en particulier le centre de l'évidement de préférence circulaire étant ainsi espacé de l'axe médian et/ou du centre du disque circulaire,
en particulier de telle sorte que le disque de butée (50), au moins en particulier dans la direction périphérique, puisse être connecté par engagement par correspondance de formes et/ou puisse être connecté de manière solidaire en rotation à un arbre d'excentrique (11), en particulier dont l'axe de rotation s'étend centralement à travers le disque circulaire,
en particulier la saillie (51) étant réalisée sous forme annulaire et l'axe de l'anneau étant espacé du centre de l'évidement de préférence circulaire.

4. Transmission selon l'une quelconque des revendications précédentes,
**caractérisée en ce que**
le disque de butée (50) est réalisé sous forme de disque circulaire qui présente une saillie (51) faisant saillie axialement, notamment radialement extérieure,
le disque circulaire présentant un évidement qui est disposé de manière excentrée, en particulier le centre de l'évidement de préférence circulaire étant ainsi espacé de l'axe médian et/ou du centre du disque circulaire,
en particulier la saillie (51) étant réalisée sous forme annulaire et l'axe de l'anneau étant espacé du centre de l'évidement de préférence circulaire.

5. Transmission selon l'une quelconque des revendications précédentes,
**caractérisée en ce que**
la région axiale recouverte par la saillie (51) est comprise par la région axiale recouverte par la région de cœur d'excentrique (31, 32),
et/ou la région axiale recouverte par le disque de butée (50) chevauchant, notamment chevauchant exactement, la région axiale recouverte par la région de cœur d'excentrique (31, 32).

6. Transmission selon l'une quelconque des revendications précédentes,
**caractérisée en ce que**
la saillie (51) est connectée par engagement par force à la région de cœur d'excentrique (31, 32), en particulier est pressée élastiquement dans la direction radiale sur cette région.

7. Transmission selon l'une quelconque des revendications précédentes,
**caractérisée en ce que**
l'arbre d'excentrique (11) présente une portion de forme non ronde au niveau de laquelle la roue planétaire est connectée de manière solidaire en rotation à l'arbre d'excentrique (11).

8. Transmission selon l'une quelconque des revendications précédentes,
**caractérisée en ce que**
la région de cœur d'excentrique (31, 32) est une portion cylindrique circulaire qui est disposée parallèlement à l'axe médian de l'arbre d'excentrique (11) et/ou de la roue planétaire, mais à distance de celui-ci, en particulier donc de manière non coaxiale à celui-ci.

9. Transmission selon l'une quelconque des revendications précédentes,
**caractérisée en ce que**
la portion de forme non ronde est espacée axialement de la région de cœur d'excentrique (31, 32).

10. Transmission selon l'une quelconque des revendications précédentes,
**caractérisée en ce que**
la portion de forme non ronde présente une forme d'hypotrochoïde, en particulier est ainsi formée sous forme d'hypotrochoïde ou est constituée de portions d'hypotrochoïde.

11. Transmission selon l'une quelconque des revendications précédentes,
**caractérisée en ce que**
la roue planétaire présente un évidement de forme correspondant à la portion de forme non ronde,
en particulier de telle sorte que la roue planétaire soit connectée de manière solidaire en rotation et sans jeu à l'arbre d'excentrique (11) au moyen de la portion non ronde.

12. Transmission selon l'une quelconque des revendications précédentes,
**caractérisée en ce que**
la denture extérieure du disque (7, 8) est en prise avec une couronne dentée (9), en particulier avec une couronne dentée (9) formant un boîtier.

13. Transmission selon l'une quelconque des revendications précédentes,
**caractérisée en ce que**
la denture extérieure est réalisée sous forme de denture à développante.

14. Transmission selon l'une quelconque des revendications précédentes,
**caractérisée en ce que**
l'arbre d'excentrique (11) présente une deuxième région de cœur d'excentrique (31, 32) qui est espacée de la première région de cœur d'excentrique (31, 32) et présente un décalage dans la direction périphérique de 180°,
en particulier les régions de cœur d'excentrique (31, 32) étant formées de manière identique.

15. Transmission selon l'une quelconque des revendications précédentes,
**caractérisée en ce que**
l'arbre d'excentrique (11) est logé de manière supportée à rotation dans un arbre de prise de force de la transmission, en particulier l'axe de l'arbre d'excentrique (11) étant disposé parallèlement à, et à distance de, l'axe de l'arbre de prise de force.

16. Transmission selon l'une quelconque des revendications précédentes,
**caractérisée en ce que**
l'arbre de prise de force est supporté à rotation dans la couronne dentée (9) au moyen d'au moins un palier oblique (6, 10).

17. Transmission selon l'une quelconque des revendications précédentes,
**caractérisée en ce que**
la roue planétaire est en prise avec une denture de roue solaire qui est disposée coaxialement par rapport à l'arbre de prise de force,
en particulier la roue planétaire, la denture de roue solaire et au moins une roue planétaire supplémentaire formant un étage de transmission de transfert à pignons droits.

18. Transmission selon l'une quelconque des revendications précédentes,
**caractérisée en ce que**
la denture de roue solaire est disposée de manière solidaire en rotation et coaxialement par rapport à une roue dentée qui est en prise avec une partie de denture entraînée par un moteur électrique directement ou par le biais d'un embrayage, en particulier un pignon.

19. Transmission selon l'une quelconque des revendications précédentes,
**caractérisée en ce que**
l'arbre d'excentrique (11) présente une deuxième région de cœur d'excentrique (31, 32) sur laquelle est disposé de manière supportée à rotation un deuxième disque à denture extérieure (7, 8) de la transmission,
la denture extérieure du deuxième disque (7, 8) étant en prise avec la denture intérieure de la couronne dentée (9).
